# EUROPEAN PATENT APPLICATION

(11) **EP 4 336 245 A1**
(43) Date of publication of application: **13.03.2024**
(21) Application number: 22876705.9
(22) Date of filing: 06.09.2022
(51) Int. Cl.: G02B 27/01, F16J 15/02

(54) **WEARABLE ELECTRONIC DEVICE COMPRISING SEALING STRUCTURE**

(30) Priority: 29.09.2021 KR 20210128538; 21.10.2021 KR 20210140871
(71) Applicant: Samsung Electronics Co., Ltd., Suwon-si, Gyeonggi-do 16677 (KR)
(72) Inventor: YANG, Soonwoong, Suwon-si, Gyeonggi-do 16677 (KR); IM, Jongkyun, Suwon-si, Gyeonggi-do 16677 (KR)
(74) Representative: Appleyard Lees IP LLP
(86) International application number: PCT/KR2022/013379
(87) International publication number: WO 2023/054930

(57) **Abstract**

An example wearable electronic device may include a housing including a first rim housing and a second rim housing coupled to form at least one opening; at least one bracket including a first surface facing the first rim housing and a second surface facing the second rim housing and disposed in a first space between the first rim housing and the second rim housing; at least one wave guide overlapped with the at least one opening and disposed to be at least partially supported by the at least one bracket; at least one display module disposed in a second space adjacent to the first space between the first rim housing and the second rim housing and disposed to face the at least one wave guide through the at least one bracket; a first sealing member disposed between the at least one bracket and the first rim housing; and a second sealing member disposed between the at least one bracket and the second rim housing.

## Description

### [Technical Field]

The disclosure relates to a wearable electronic device including a sealing structure.

### [Background Art]

Electronic devices include wearable electronic devices that may be worn on a part of a user's body so as to improve portability or the user's accessibility. Wearable electronic devices may include, for example, smart glasses in the form of glasses. Smart glasses may include, for example, wearable computer glasses that provide augmented reality (AR) in which visual information such as a virtual image is added to a subject (e.g., foreground) actually seen by a user wearing the same. The wearable electronic device may include a plurality of optical components for providing image information generated by a display module to the user, and these optical components need to be firmly fixed in the electronic device.

### [Disclosure of Invention]

### [Technical Problem]

A wearable electronic device may be partially worn on a user's head like glasses and output image information provided by a display module to be related to an external object visible through the user's naked eye, thereby providing virtual reality or augmented reality to the user. The wearable electronic device may include a housing having a pair of rim shapes and a pair of temples connected to both ends of the housing and being worn on a user's ear. Due to structural characteristics of the wearable electronic device, most electronic components (e.g., display module, substrate, battery, input/output module, and/or sensor module) may be disposed in an inner space of the temples. Accordingly, image information generated by the display module may be transmitted to a user through a wave guide formed and disposed to close rim-shaped openings formed in the housing and to satisfy a total reflection condition.

The wearable electronic device may include a pair of visors that closes openings with the optical unit interposed therebetween and having a curved surface moving a focal length so that image information transmitted from the display module matches the user's field of view. In this case, the wearable electronic device may reduce the inflow of foreign substances through at least one sealing member disposed between the wave guide and the visors.

However, in a case that the wave guide is disposed between the visors to be directly pressed through the sealing member, self-deformation of the wave guide may occur due to an amount of pressing of the sealing member, which may distort the total reflection condition of the wave guide, thereby deteriorating optical performance. Further, because the wave guide is positioned through the sealing member pressed to have a designated compressive force, assembly of the wave guide may be difficult.

Various embodiments of the disclosure may provide a wearable electronic device including a sealing structure configured to reduce optical performance degradation due to external pressure of the sealing member by having a disposition structure in which a wave guide does not contact the sealing member.

According to various embodiments, a wearable electronic device including a sealing structure having an improved assembling property without deteriorating an optical performance may be provided.

However, advantages of the technology of the disclosure are not limited to solving the above-mentioned problems, and other features and advantages will be apparent.

### [Solution to Problem]

According to various embodiments, a wearable electronic device may include a housing including a first rim housing and a second rim housing coupled to form at least one opening; at least one bracket including a first surface facing the first rim housing and a second surface facing the second rim housing and disposed in a first space between the first rim housing and the second rim housing; at least one wave guide overlapped with the at least one opening and disposed to be at least partially supported by the at least one bracket; at least one display module disposed in a second space adjacent to the first space between the first rim housing and the second rim housing and disposed to face the at least one wave guide through the at least one bracket; a first sealing member disposed between the at least one bracket and the first rim housing; and a second sealing member disposed between the at least one bracket and the second rim housing.

According to various embodiments, an electronic device may include a housing including a first rim housing and a second rim housing coupled to form at least one opening; a bracket including a first surface facing the first rim housing and a second surface facing the second rim housing and disposed in a first space between the first rim housing and the second rim housing; a wave guide overlapped with the at least one opening and disposed to be at least partially supported by the bracket; a display module disposed in a second space adjacent to the first space between the first rim housing and the second rim housing and disposed to face the wave guide through the bracket; a first sealing member disposed between the bracket and the first rim housing; and a second sealing member disposed between the at least one bracket and the second rim housing.

### [Advantageous Effects of invention]

A wearable electronic device according to various embodiments of the disclosure includes a bracket disposed in an inner space of a housing and includes a sealing structure in which a sealing member is disposed between the housing and the bracket without involvement of a wave guide, thereby reducing optical performance deterioration of the wave guide and helping to improve assembly.

Further, various effects directly or indirectly identified through this disclosure can be provided.

### [Brief Description of Drawings]

In connection with the description of the drawings, the same or similar reference numerals may be used for the same or similar components.
FIG. 1 is a block diagram illustrating an example electronic device in a network environment according to various embodiments;
FIG. 2 is a perspective view illustrating an example wearable electronic device according to various embodiments;
FIG. 3 is an exploded perspective view illustrating an example wearable electronic device according to various embodiments;
FIG. 4 is a partial cross-sectional view illustrating the example wearable electronic device taken along line 4-4 of FIG. 2 according to various embodiments;
FIGS. 5A, 5B, 5C, and 5D are diagrams illustrating an example process in which a wave guide is disposed in a bracket according to various embodiments;
FIG. 5E is a cross-sectional perspective view taken along line 5d-5d of FIG. 5D according to various embodiments;
FIG. 5F is a diagram illustrating a partial configuration of an example support structure of a light refractive member according to various embodiments;
FIG. 6A is a front view illustrating a disposition relationship between a first sealing member and a light source of an example display according to various embodiments;
FIG. 6B is a diagram illustrating the disposition relationship between a second sealing member and a light source of the example display when viewed from a rear surface according to various embodiments;
FIG. 6C is a partial perspective view illustrating an example wearable electronic device having an enlarged disposition configuration of an area 6c of FIG. 6B according to various embodiments;
FIG. 7 is a diagram illustrating an example coupling structure between a bracket and a housing according to various embodiments;
FIGS. 8A and 8B are diagrams illustrating an example bracket according to various embodiments; and
FIG. 9 is a diagram illustrating an example bracket according to various embodiments.

### [Mode for the Invention]

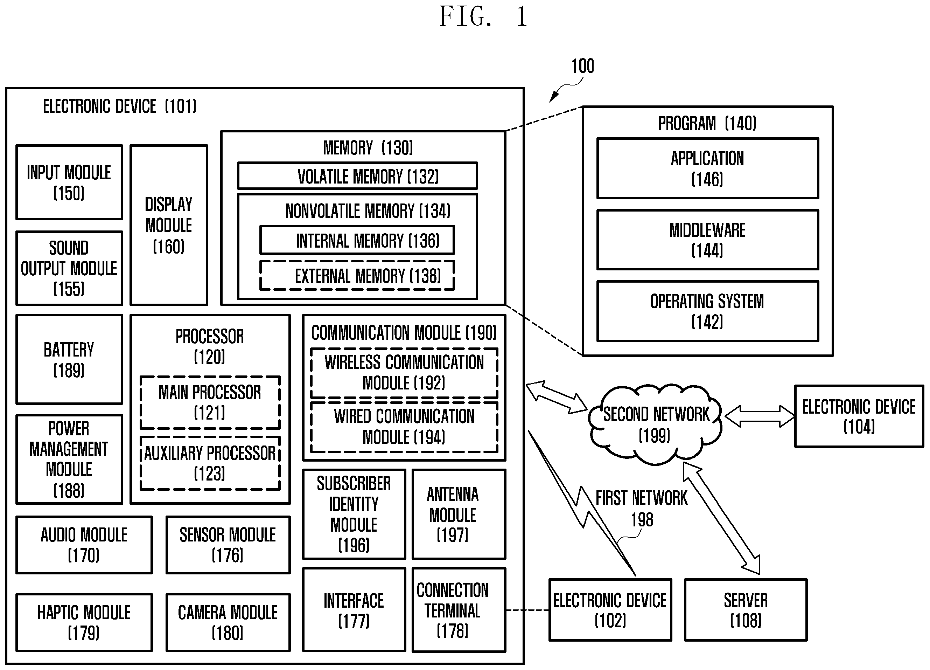

FIG. 1 is a block diagram illustrating an example electronic device in a network environment according to various embodiments.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). The electronic device 101 may communicate with the electronic device 104 via the server 108. The electronic device 101 includes a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In various embodiments, at least one (e.g., the display device 160 or the camera module 180) of the components may be omitted from the electronic device 101, or one or more other components may be added in the electronic device 101. In various embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for an incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input device 150, or output the sound via the audio output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. The interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). The connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture an image or moving images. The camera module 180 may include one or more lenses, image sensors, image signal processors, or flashes.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

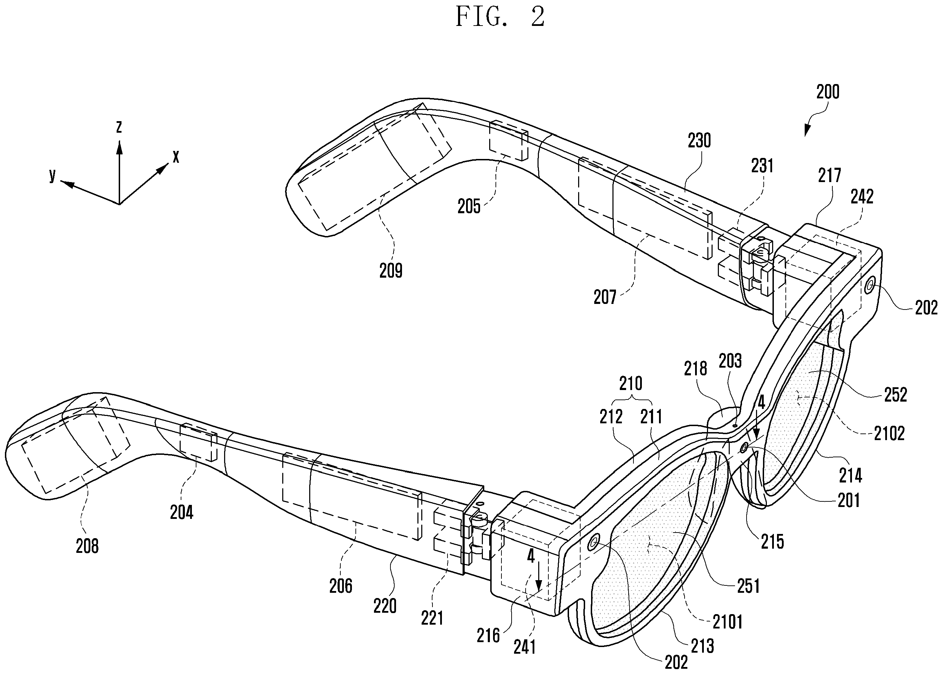

FIG. 2 is a perspective view illustrating an example wearable electronic device according to various embodiments.

A wearable electronic device 200 of FIG. 2 may be at least partially similar to the electronic device 101 of FIG. 1 or may further include other components of the electronic device.

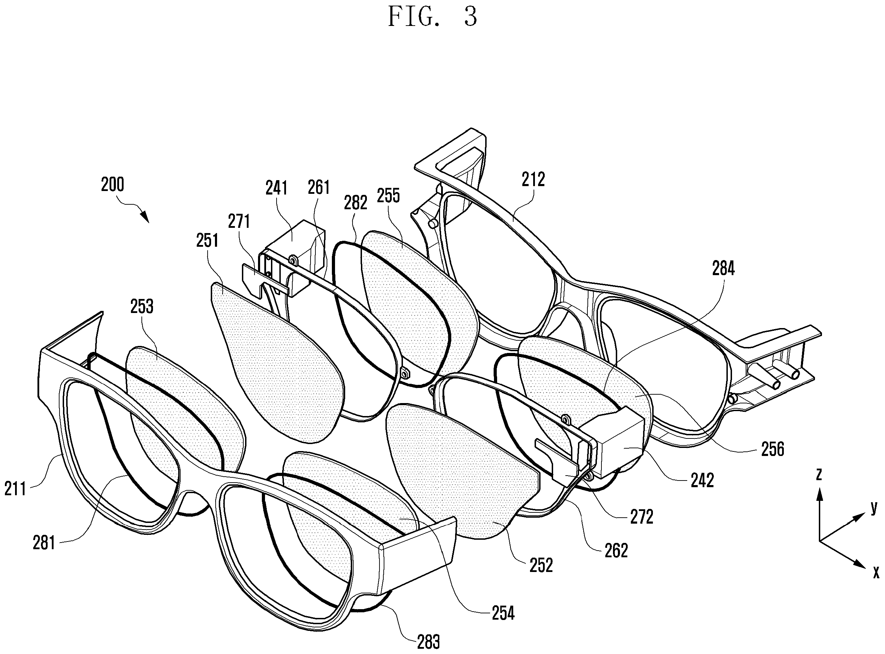

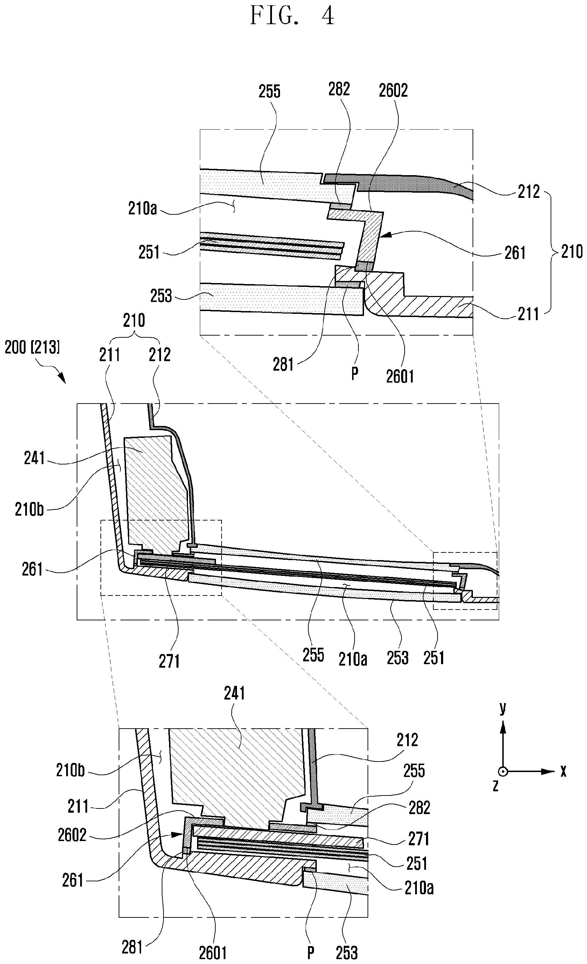

With reference to FIG. 2, the wearable electronic device 200 (e.g., electronic device) may include a housing 210 including a first rim housing 211 and a second rim housing 212 coupled to the first rim housing 211 and a pair of temples 220 and 230 rotatably coupled at both ends, respectively, of the housing 210. According to an embodiment, the housing 210 may include a material such as a polymer (e.g., plastic) for wearability. In various embodiments, the housing 210 may include various materials such as a metal, ceramic, or FRP (e.g., glass fiber reinforced plastic (GFRP) or carbon fiber reinforced plastic (CFRP)) in consideration of weight, strength, or an aesthetic external appearance. According to an embodiment, the housing 210 is an eyeglasses type and may include a first rim 213 including a first opening 2101, a second rim 214 including a second opening 2102, and a bridge 215 for connecting the first rim 213 and the second rim 214. According to an embodiment, the housing 210 may include a first end piece 216 formed to be connected to the first temple 220 through a first hinge device 221 at an end portion of the first rim 213 and a second end piece 217 formed to be connected to the second temple 230 through a second hinge device 231 at an end portion of the second rim 214. According to an embodiment, the wearable electronic device 200 may include a nose pad 218 disposed in at least a portion of the bridge 215 and to be disposed on the user's nose. In various embodiments, the nose pad 218 may be integrally formed with the bridge 215. According to an embodiment, the wearable electronic device 200 may include a first wave guide 251 disposed to correspond to the first opening 2101 of the first rim 213 and a second wave guide 252 disposed to correspond to the second opening 2102 of the second rim 214. According to an embodiment, the first wave guide 251 may be disposed in a space (e.g., a first space 210a of FIG. 4) between a first front visor (e.g., a first front visor 253 of FIG. 3) disposed through the first rim 213 and a first rear visor (e.g., the first rear visor 255 of FIG. 3). According to an embodiment, the second wave guide 252 may be disposed in a space between a second front visor (e.g., a second front visor 254 of FIG. 3) and a second rear visor (e.g., a second rear visor 256 of FIG. 3) disposed through the second rim 214. According to an embodiment, the first wave guide 251 may include an optical lens (wave guide) having total reflection conditions for transmitting image information provided through the first display module 241 disposed in the first end piece 216 to the user. According to an embodiment, the second wave guide 252 may include an optical lens (wave guide) having total reflection conditions for transmitting image information provided through a second display module 242 disposed in the second end piece 217 to the user. According to an embodiment, the wearable electronic device 200 may be worn on the user's head in a manner that the first temple 220 and the second temple 230 are spread and disposed on the user's ears and the nose pad 218 is over the user's nose. In this case, as the first wave guide 251 is positioned to correspond to the user's right eye, and the second wave guide 252 is positioned to correspond to the user's left eye, image information provided from a first display module 241 and the second display module 242 may be output for the user to view. In various embodiments, the first temple 220 and the second temple 230 may be replaced with a hanging member designed to enclose at least a portion of the user's head. According to an embodiment, the hanging member may include various other wearing structures such as straps or helmets coupled to the housing 210 to be wearable on the head.

According to various embodiments, the wearable electronic device 200 may include smartglasses (or smart glasses). For example, the wearable electronic device 200 may include wearable computer glasses that provide augmented reality by adding visual information to a (real space or real world) foreground actually viewed by the user. According to an embodiment, the augmented reality may provide various image information obtained by synthesizing a virtual image with a preview image of a real space or object. For example, in an augmented reality mode, the wearable electronic device 200 may synthesize virtual images displayed on the first wave guide 251 and the second wave guide 252 with an actual visible foreground image and provide the synthesized image to the user.

According to various embodiments, the first wave guide 251 and the second wave guide 252 may include a wave guide for performing total internal reflection (TIR) of light provided from light sources of the first display module 241 and the second display module 242. According to an embodiment, the wave guide may include, for example, glass or a polymer, and include a nanopattern (e.g., polygonal or curved grating structure) formed inside or on the surface. In various embodiments, the first display module 241 and the second display module 242 may include a projector for projecting light related to an image to the first wave guide 251 and the second wave guide 252. According to various embodiments, the first wave guide 251 and the second wave guide 252 may include a see-through type transparent display. The see-through type transparent display may include, for example, a transparent organic light emitting diode (OLED) display, a transparent micro LED, a transparent liquid crystal display (LCD), or a transparent thin-film electroluminescence (TFE) type display.

According to various embodiments, the wearable electronic device 200 may include a first camera module 201, a plurality of second camera modules 202, audio modules 203, 204, and 205, a first substrate 206, a second substrate 207, a first battery 208, or a second battery 209. In various embodiments, the wearable electronic device 200 may be implemented by including at least some of the components included in the electronic device 101 of FIG. 1 or additionally including other components. The position or shape of the components included in the wearable electronic device 200 is not limited to the example illustrated in FIG. 2 and may be variously modified.

According to various embodiments, the first camera module 201 or the plurality of second camera modules 202 may include, for example, one or a plurality of lenses, an image sensor, and/or an image signal processor. In an embodiment, the first camera module 201 may be positioned in the bridge 215 and obtain image data for a foreground (e.g., actual image) in front of the eyes. The position or number of the first camera module 201 is not limited to the illustrated example and may vary. In an embodiment, the plurality of second camera modules 202 may measure a depth of field (DOF). The wearable electronic device 200 may perform various functions such as head tracking, hand detection or tracking, gesture recognition, or space recognition using a depth of field (e.g., 3DOF or 6DOF) obtained through the plurality of second camera modules 202. The plurality of second camera modules 202 may include, for example, a global shutter (GS) camera or a rolling shutter (RS) camera, and the position or number thereof is not limited to the illustrated example and may vary.

According to various embodiments, the wearable electronic device 200 may include an eye tracking module. The eye tracking module may track the user's gaze using, for example and without limitation, at least one of an EOG sensor (electro-oculography or electrooculogram), a coil system, a dual Purkinje system, bright pupil systems, or dark pupil systems. The gaze tracking module may include, for example, at least one camera (e.g., micro camera or IR LED) positioned at the housing 210 (e.g., the first rim 213, the second rim 214, or the bridge 215) and for tracking the gaze of a wearer.

According to various embodiments, the wearable electronic device 200 may include at least one light emitting element (not illustrated). For example, the light emitting element may provide state information of the wearable electronic device 200 in the form of light. As another example, the light emitting element may provide a light source interworked with an operation of the camera module. The light emitting element may include, for example, an LED, an IR LED, or a xenon lamp.

According to various embodiments, the audio modules 203, 204, and 205 may include, for example, a first audio module 203 for a microphone, a second audio module 204 for a first speaker, and a third audio module 205 for a second speaker. In an embodiment, the first audio module 203 may include a microphone hole formed in the bridge 215 of the housing 210 and a microphone positioned inside the bridge 215 to correspond to the microphone hole. The position or number of the first audio module 203 for the microphone is not limited to the illustrated example and may vary. In various embodiments, the wearable electronic device 200 may detect a direction of sound using a plurality of microphones. In an embodiment, the second audio module 204 may include a first speaker positioned inside the first temple 220, and the third audio module 205 may include a second speaker positioned inside the second temple 230. The first speaker or the second speaker may be, for example, a piezo speaker (e.g., bone conduction speaker) implemented without a speaker hole. The second audio module 204 for the first speaker or the third audio module 205 for the second speaker may be implemented in various other methods.

According to various embodiments, the first substrate 206 may be positioned inside the first temple 220, and the second substrate 207 may be positioned inside the second temple 230. The first substrate 206 and/or the second substrate 207 may include, for example, a printed circuit board (PCB), a flexible PCB (FPCB), or a rigid-flexible PCB (RFPCB). In various embodiments, the first substrate 206 or the second substrate 207 may include a main PCB, a slave PCB disposed to be partially overlapped with the main PCB, and/or an interposer substrate between the main PCB and the slave PCB. The first substrate 206 or the second substrate 207 may include, for example, various electronic components (e.g., at least some of the components included in the electronic device 101 of FIG. 1) such as the processor (e.g., the processor 120 of FIG. 1), the memory (e.g., the memory 130 of FIG. 1), the communication module (e.g., the communication module 190 of FIG. 1), or the interface (e.g., the interface 177 of FIG. 1). The first substrate 206 or the second substrate 207 may be electrically connected to other components using an electrical path such as a cable or a flexible printed circuit board positioned inside the housing 210. In various embodiments, one of the first substrate 206 and the second substrate 207 may be omitted.

According to various embodiments, the first battery 208 may be positioned inside the first temple 220, and the second battery 209 may be positioned inside the second temple 230. The first battery 208 and the second battery 209 are devices (e.g., the battery 189 of FIG. 1) for supplying power to the components of the wearable electronic device 200 and may include, for example, a non-rechargeable primary battery, a rechargeable secondary battery, or a fuel cell. In various embodiments, the first battery 208 or the second battery 209 may be detachably attached to the housing 210. In various embodiments, one of the first battery 208 and the second battery 209 may be omitted. The location or number of batteries 208 and 209 is not limited to the illustrated example and may vary.

According to various embodiments, the wearable electronic device 200 may include a sensor module (e.g., the sensor module 176 of FIG. 1). The sensor module may generate an electrical signal or data value corresponding to an internal operating state or an external environmental state of the wearable electronic device 200. The sensor module may further include at least one of, for example, a gesture sensor, a gyro sensor, a barometric pressure sensor, a magnetic sensor, an acceleration sensor, a grip sensor, a color sensor, an infrared (IR) sensor, a biometric sensor (e.g., HRM sensor), a temperature sensor, a humidity sensor, or an illuminance sensor. In various embodiments, the sensor module may recognize the user's biometric information using various biometric sensors (or biometric recognition sensors) such as an e-nose sensor, an electromyography sensor (EMG sensor), an electroencephalogram sensor (EEG sensor), an electrocardiogram sensor (ECG sensor), or an iris sensor. In various embodiments, the sensor module may further include at least one control circuit for controlling at least one sensor belonging to inside.

According to various embodiments, the wearable electronic device 200 may include an input module (e.g., the input module 150 of FIG. 1). The input module may include, for example, a touch pad or a button. The touch pad may recognize a touch input using, for example, at least one of a capacitive type, a pressure sensitive type, an infrared type, or an ultrasonic type. The touch pad may further include a tactile layer and provide a tactile response to the user. The button may include, for example, a physical button, an optical key, or a keypad. The input module may include various other types of user interfaces. In various embodiments, the input module may include at least one sensor module. In various embodiments, the button may be disposed in at least one of the at least one temple 220 and 230, the rims 213 and 214, and/or the bridge 215.

According to various embodiments, the wearable electronic device 200 may include a connection terminal (e.g., the connection terminal 178 of FIG. 1). The connection terminal may include a connector through which the wearable electronic device 200 may be physically connected to an external electronic device (e.g., the electronic device 102 of FIG. 1).

According to various embodiments, the wearable electronic device 200 may include at least one antenna (e.g., the antenna module 197 of FIG. 1). For example, the antenna may include a legacy antenna, an antenna for mmWave, a near field communication (NFC) antenna, a wireless charging antenna, and/or a magnetic secure transmission (MST) antenna. The antenna may, for example, perform long-distance or short-distance communication with an external device or wirelessly transmit and receive power required for charging. In various embodiments, the antenna may be implemented using a conductive unit portion disposed to be segmented through a nonconductive segment disposed in at least a portion of the temples 220 and 230 or the housing 210 including a conductive material.

FIG. 3 is an exploded perspective view illustrating an example wearable electronic device according to various embodiments.

With reference to FIG. 3, the wearable electronic device 200 may include a housing (e.g., the housing 210 of FIG. 2) and a pair of temples (e.g., the first temple 220 and the second temple 230 of FIG. 2) foldably disposed at both ends of the housing 210. According to an embodiment, the housing 210 may include a first rim housing 211 facing in a first direction (e.g., -y-axis direction) and a second rim housing 212 coupled to the first rim housing 211 and facing in a second direction (e.g., y-axis direction) opposite to the first direction. According to an embodiment, the housing 210 may include a pair of rims (e.g., the rims 213 and 214 of FIG. 2) such as a structure of glasses through coupling of the first rim housing 211 and the second rim housing 212 and end pieces (e.g., the end pieces 216 and 217 of FIG. 2) extended from each of the rims 213 and 214 and formed to couple the temples 220 and 230.

According to various embodiments, the wearable electronic device 200 may include a first bracket 261 disposed at a position corresponding to the first rim (e.g., the first rim 213 of FIG. 2) in a first space (e.g., the first space 210a of FIG. 4) between the first rim housing 211 and the second rim housing 212 and a second bracket 262 disposed at a position corresponding to the second rim (e.g., the second rim 214 of FIG. 2). According to an embodiment, the first bracket 261 and the second bracket 262 may be integrally formed to be connected to each other. According to an embodiment, the wearable electronic device 200 may include a first wave guide 251 disposed between the first bracket 261 and the first rim housing 211 and a second wave guide 252 disposed between the second bracket 262 and the first rim housing 211. According to an embodiment, the wearable electronic device 200 may include a first display module 241 and a second display module 242 formed through the first rim housing 211 and the second rim housing 212 and disposed in a second space (e.g., a second space 210b of FIG. 4) provided adjacent to a first space (e.g., the first space 210a of FIG. 4). According to an embodiment, at least a portion of the first display module 241 may be supported through the first bracket 261 and be disposed to face at least a portion of the first wave guide 251. According to an embodiment, at least a portion of the second display module 242 may be supported through the second bracket 262 and be disposed to face at least a portion of the second wave guide 252. For example, the first display module 241 and the second display module 242 may be disposed in an inner space (e.g., the second space 210b of FIG. 4) of a first end piece (e.g., the first end piece 216 of FIG. 2) and a second end piece (e.g., the second end piece 217 of FIG. 2) of the housing 210. In various embodiments, the first bracket 261 and the second bracket 262 may include a polymer (e.g., PC) material. In various embodiments, the first bracket 261 and the second bracket 262 may include a metal material. In this case, the first bracket 261 and the second bracket 262 including a metal material may help heat dissipation that diffuses a heat generated in the first display module 241 and the second display module 242. According to an embodiment, the wearable electronic device 200 may include a first light refraction member 271 (e.g., first prism) disposed to transmit a light source of the first display module 241 to the first wave guide 251 between the first wave guide 251 and the first bracket 261. According to an embodiment, the wearable electronic device 200 may include a second light refraction member 272 (e.g., second prism) disposed to transmit a light source of the second display module 242 to the second wave guide 252 between the second wave guide 252 and the second bracket 262. According to an embodiment, the first light refraction member 271 and the second light refraction member 272 may have a refractive index for changing an incident angle so that light radiated from the light sources of the first display module 241 and the second display module 242 has an angle of 90 degrees and is applied to the first wave guide 251 and the second wave guide 252. The first light refraction member 271 and the second light refraction member 272 may include a transparent polymer material or glass having a designated refractive index.

According to various embodiments, the wearable electronic device 200 may include a first front visor 253 fixed to the first rim housing 211 at a position corresponding to the first rim (e.g., the first rim 213 of FIG. 2) and a first rear visor 255 fixed to the second rim housing 212. According to an embodiment, the first wave guide 251 may be disposed in a space (e.g., the first space 210a of FIG. 4) between the first front visor 253 and the first rear visor 255. According to an embodiment, the wearable electronic device 200 may include a second front visor 254 fixed to the first rim housing 211 at a position corresponding to the second rim (e.g., the second rim 214 of FIG. 2) and a second rear visor 256 fixed to the second rim housing 212. According to an embodiment, the second wave guide 252 may be disposed in a space (e.g., the first space 210a of FIG. 4) between the second front visor 254 and the second rear visor 256. According to an embodiment, the front visors 253 and 254 and the rear visors 255 and 256 are formed to have a curved surface, thereby including a material that moves a focal length so that the user may identify an image formed in the wave guides 251 and 252 by the naked eye. For example, the front visors 253 and 254 and the rear visors 255 and 256 may include a transparent PC or glass.

According to various embodiments, the wearable electronic device 200 may have a sealing structure for protecting the first wave guide 251 and the second wave guide 252 disposed in an inner space (e.g., the first space 210a of FIG. 4) of the housing 210 from external foreign substances and/or moisture. According to an embodiment, the wearable electronic device 200 may include a first sealing member 281 disposed between the first rim housing 211 and the first bracket 261 and a second sealing member 282 disposed between the first bracket 261 and the first rear visor 255. According to an embodiment, the wearable electronic device 200 may include a third sealing member 283 disposed between the first rim housing 211 and the second bracket 262 and a fourth sealing member 284 disposed between the second bracket 262 and the second rear visor 256. The first, second, third, and fourth sealing members 281, 282, 283, and 284 are compressible members and may include, for example and without limitation, compressive tapes, sponge, silicone, rubber, or urethane. According to an embodiment, the wearable electronic device 200 may include a sealed sealing space provided for the first wave guide 251 and the second wave guide 252 through the first, second, third, and fourth sealing members 281, 282, 283, and 284, the brackets 261 and 262, the first rim housing 211, and the first and second rear visors 255 and 256.

In the wearable electronic device 200 according to various example embodiments of the disclosure, the housing 210 and/or the visors (e.g., the rear visors 255 and 256) and a sealing structure in which the sealing members 281, 282, 283, and 284 are disposed between the brackets 261 and 262 disposed in an inner space (e.g., the first space 210a of FIG. 4) of the housing 210 are provided without direct intervention of the first wave guide 251 and the second wave guide 252, thereby helping to reduce optical performance deterioration and improve assembly by reducing or minimizing deformation of the first wave guide 251 and the second wave guide 252 according to the disposition of the sealing members 281, 282, 283, and 284. Furthermore, because the first wave guide 251 and the second wave guide 252 are supported by side surfaces (e.g., edges) through the brackets 261 and 262, a light leakage phenomenon may be reduced or prevented through the wave guides 251 and 252, and strong support may be obtained.

Hereinafter, a sealing structure disposed at the first rim (e.g., the first rim 213 of FIG. 2) of the wearable electronic device 200 is described in detail with reference to the drawings, but a sealing structure disposed at the second rim (e.g., the second rim 214 of FIG. 2) may also have substantially the same configuration. For example, the sealing structure for the first wave guide 251 disposed in the first space 210a formed through the first rim housing 211 and the second rim housing 212 is described in detail with reference to the following drawings, but a sealing structure for the second wave guide 252 disposed in the first space 210a may also be substantially the same.

FIG. 4 is a partial cross-sectional view illustrating an example wearable electronic device taken along line 4-4 of FIG. 2 according to various embodiments.

With reference to FIG. 4, the wearable electronic device 200 may include a housing (e.g., the housing 210 of FIG. 2) and a pair of temples (e.g., the first temple 220 and the second temple 230 of FIG. 2) foldably disposed at both ends of the housing 210. According to an embodiment, the housing 210 may include a first rim housing 211 and a second rim housing 212 coupled to the first rim housing 211. According to an embodiment, the housing 210 may include a pair of rims (e.g., the rims 213 and 214 of FIG. 2) and end pieces (e.g., the end pieces 216 and 217 of FIG. 2) extended from each of the rims 213 and 214 and formed to couple the temples 220 and 230 through coupling of the first rim housing 211 and the second rim housing 212.

According to various embodiments, the wearable electronic device 200 may include a first bracket 261 disposed at a position corresponding to the first rim (e.g., the first rim 213 of FIG. 2) in the first space 210a between the first rim housing 211 and the second rim housing 212. According to an embodiment, the first bracket 261 may include a first surface 2601 facing the first rim housing 211 and a second surface 2602 facing the second rim housing 212. According to an embodiment, the first bracket 261 may serve as a partition wall for dividing the first space 210a in which the first wave guide 251 is disposed and the second space 210b in which the first display module 241 is disposed in an inner space of the housing 210. According to an embodiment, the first bracket 261 may include a support structure for supporting the first display module 241 disposed in the second space 210b. According to an embodiment, the wearable electronic device 200 may include a first wave guide 251 disposed between the first bracket 261 and the first rim housing 211 in an inner space of the housing 210. According to an embodiment, at least a portion (e.g., edge) of the first wave guide 251 may be disposed to receive support from the first rim housing 211 and/or the second rim housing 212. In some embodiments, at least a portion (e.g., edge) of the first wave guide 251 may be attached to the first rim housing 211 and/or the second rim housing 212 through an adhesive member.

According to various embodiments, the wearable electronic device 200 may include a first sealing member 281 disposed between at least a portion of the first surface 2601 of the first bracket 261 and an inner surface of the first rim housing 211 and a second sealing member 282 disposed between at least a portion of the second surface 2602 of the first bracket 261 and the first rear visor 255. According to an embodiment, the first rear visor 255 may be coupled to the second rim housing 212 in a manner that closes the first opening (e.g., the first opening 2101 of FIG. 2). The first front visor 253 may also be coupled to the first rim housing 211 in a manner that closes the first opening (e.g., the first opening 2101 of FIG. 2). For example, the first front visor 253 may be attached to the first rim housing 211 through an adhesive member P. In some embodiments, the first front visor 253 and the first rear visor 255 may be attached to the first rim housing 211 and the second rim housing 212, respectively through a process such as bonding, taping, or fusion. Accordingly, the wearable electronic device 200 may include a first space 210a provided through the first front visor 253 fixed to the first rim housing 211 and the first rear visor 255 fixed to the second rim housing 212. In this case, at least a portion of the first space 210a is sealed through the first sealing member 281 disposed between the first surface 2601 of the first bracket 261 and the first rim housing 211 and the second sealing member 282 disposed between the second surface 2602 of the first bracket 261 and the first rear visor 255, thereby blocking inflow of external foreign substances. In various embodiments, the first sealing member 281 may be disposed between the first surface 2601 of the first bracket 261 and the first front visor 253. In various embodiments, the second sealing member 282 may be disposed between the second surface 2602 of the first bracket 261 and the second rim housing 212.

The wearable electronic device 200 according to various example embodiments of the disclosure includes a pair of rims (e.g., the first rim 213 and the second rim 214 of FIG. 2), and each sealing structure applied thereto is illustrated and described, but the disclosure is not limited thereto. For example, it will be apparent that the sealing structure of the disclosure may be applied to a wearable electronic device including one rim or three or more rims.

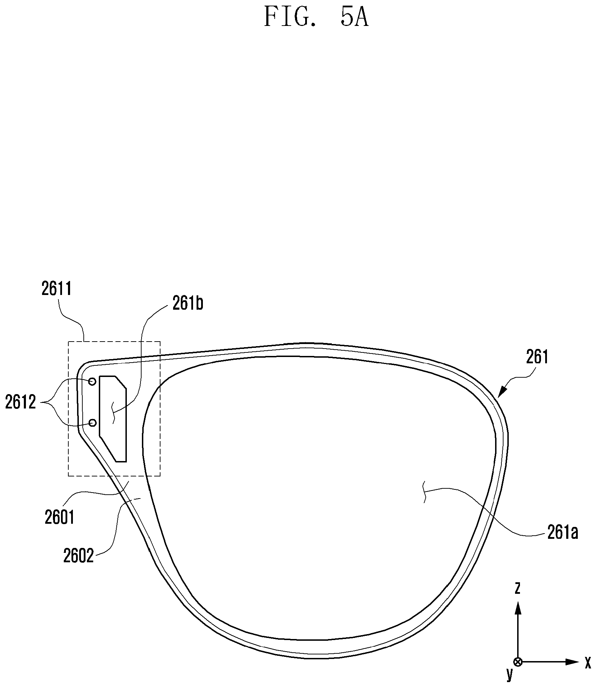

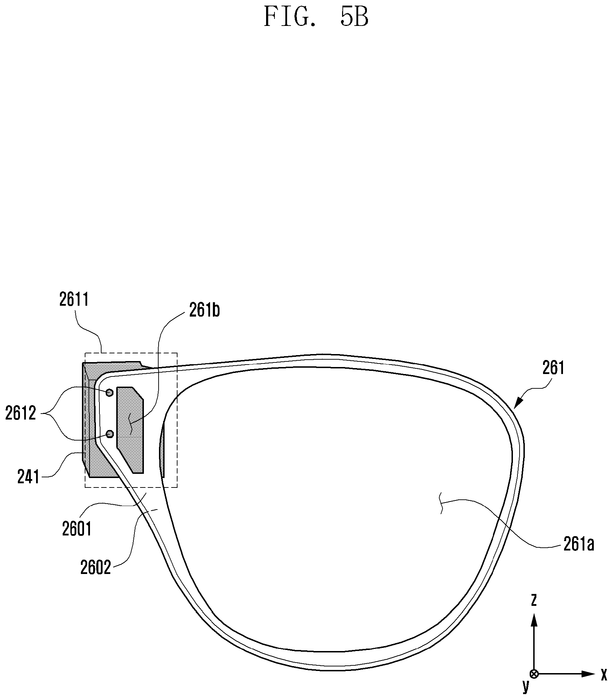

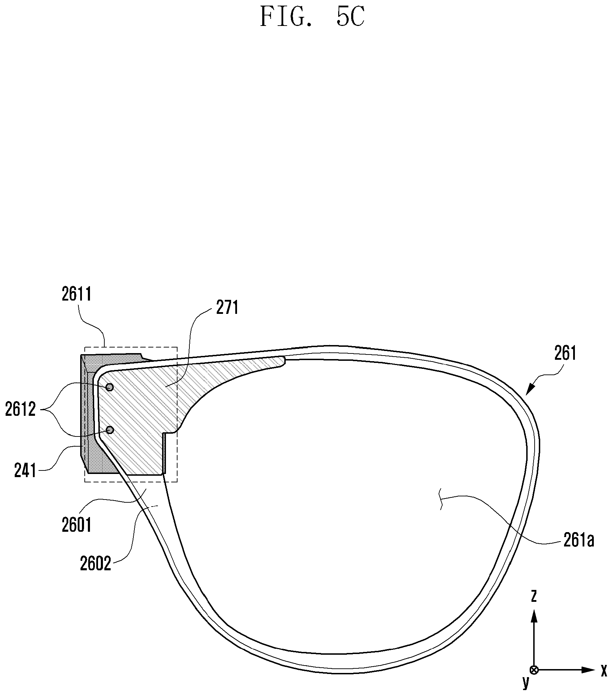

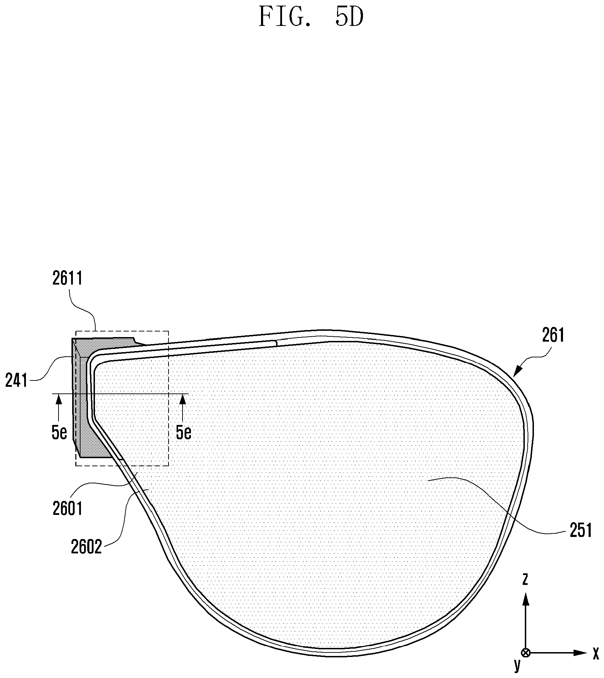

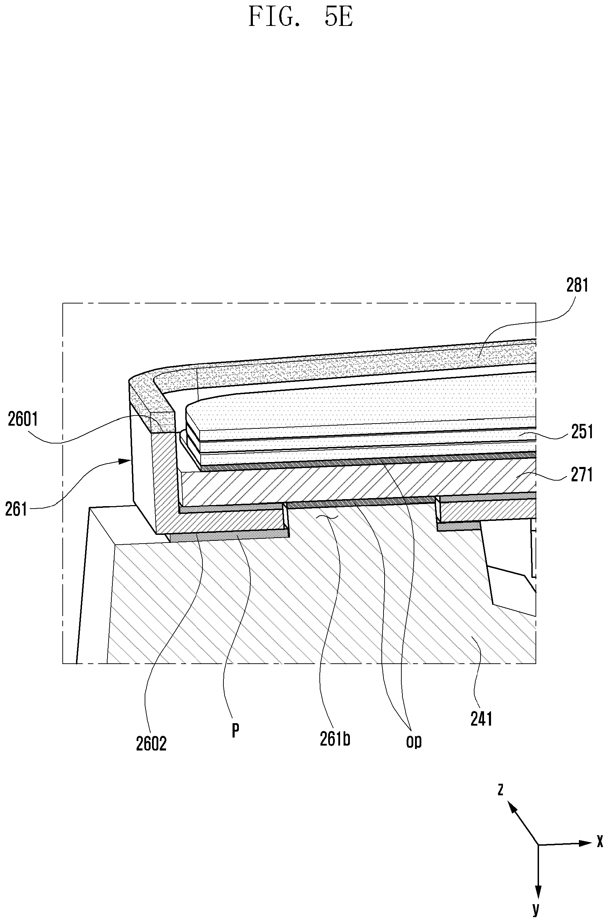

FIGS. 5A, 5B, 5C, and 5D are diagrams illustrating an example process in which a wave guide is disposed in a bracket according to various embodiments. FIG. 5E is a cross-sectional perspective view taken along line 5d-5d of FIG. 5D according to various embodiments.

FIGS. 5A, 5B, 5C, 5D, and 5E illustrate a coupling structure of the first bracket 261 and the first wave guide 251 disposed at the first rim (e.g., the first rim 213 of FIG. 2) of the wearable electronic device 200, but a coupling structure of the second bracket 262 and the second wave guide 252 disposed at the second rim (e.g., the second rim 214 of FIG. 2) may also have substantially the same configuration.

With reference to FIGS. 5A, 5B, 5C, 5D, and 5E, the wearable electronic device (e.g., the wearable electronic device 200 of FIG. 4) may include a first bracket 261. For example, the first bracket 261 may be made of or include a metal material or a polymer (e.g., PC material). According to an embodiment, the first bracket 261 may include an opening 261a formed in a size corresponding to the first opening (e.g., the first opening 2101 of FIG. 2) of the wearable electronic device 200. For example, because the first bracket 261 is disposed inside (e.g., the first space 210a of FIG. 4) the housing (e.g., the housing 210 of FIG. 4) and is disposed not to be visually visible from the outside, the first bracket 261 may be formed to be larger than the first opening 2101 of the wearable electronic device 200. According to an embodiment, the first bracket 261 may include a mounting part 2611 for mounting the first display module 241. According to an embodiment, the mounting part 2611 may be formed in a shape corresponding to the second space (e.g., the second space 210b of FIG. 4) in a position close to the first end piece (e.g., the first end piece 216 of FIG. 2) among edges of the first bracket 261. According to an embodiment, the mounting part 2611 may include a light source guide hole 261b formed to expose the light source of the first display module 241. Accordingly, at least a portion of the first display module 241 may be disposed to face the mounting part 2611 at the second surface 2602 of the first bracket 261, and the light source may be exposed in a direction of the first surface 2601 through the light source guide hole 261b. According to an embodiment, the first bracket 261 may include at least two alignment grooves 2612 for intuitive mounting of the first display module 241. Therefore, because the first display module 241 is mounted in the mounting part 2611 of the first bracket 261 through the alignment grooves 2612, a separate alignment means or process is not required, thereby helping to improve assembly. In various embodiments, the alignment grooves 2612 may include at least one hole having a designated shape (e.g., cross shape or polygonal shape). According to an embodiment, at least a portion of the first display module 241 may be attached to the second surface 2602 of the first bracket 261 through an adhesive member. In various embodiments, the first display module 241 may be fixed to the first bracket 261 through structural coupling (e.g., snap-fit coupling).

According to various embodiments, the wearable electronic device 200 may include a first light refraction member 271 disposed in at least the mounting part 2611 of the first bracket 261. According to an embodiment, the first light refraction member 271 may be disposed at a position overlapped with the mounting part 2611 at the first surface 2601 of the first bracket 261. In this case, at least a portion of the first light refraction member 271 may be disposed in a manner that faces the light source of the first display 241 exposed through the light source guide hole 261b.

According to various embodiments, the wearable electronic device (e.g., the wearable electronic device 200 of FIG. 4) may include a first wave guide 251 disposed at the first bracket 261. According to an embodiment, the first wave guide 251 may be disposed in a manner that closes the opening 261a of the first bracket 261. According to an embodiment, the first wave guide 251 may be coupled to the first bracket 261 in a manner to be attached through an adhesive member along the edge. In this case, the first light refraction member 271 may be disposed in a manner in which it is interposed between the mounting part 2611 of the first bracket 261 and the first wave guide 251. For example, light related to an image projected from the first display module 241 may be refracted to have an appropriate angle (e.g., 90 degrees) through the first light refraction member 271, and then transmitted to the first wave guide 251. According to an embodiment, light related to the image transmitted to the first wave guide 251 may be identified by the user's naked eye by being transmitted through total reflection.

With reference to FIG. 5E, the first light refraction member 271 may be disposed to face the light source of the first display module 241 exposed through the light source guide hole 261b of the first bracket 261. According to an embodiment, the first wave guide 251 may be disposed to correspond to the first bracket 261 with the first light refraction member 271 interposed therebetween. In this case, at least a portion of the first wave guide 251 may be disposed to face the first light refraction member 271. According to an embodiment, the first light refraction member 271 may be attached to face the light source of the first display module 241 and the first wave guide 251 through an optical adhesive member OP (e.g., optical clear adhesive (OCA)).

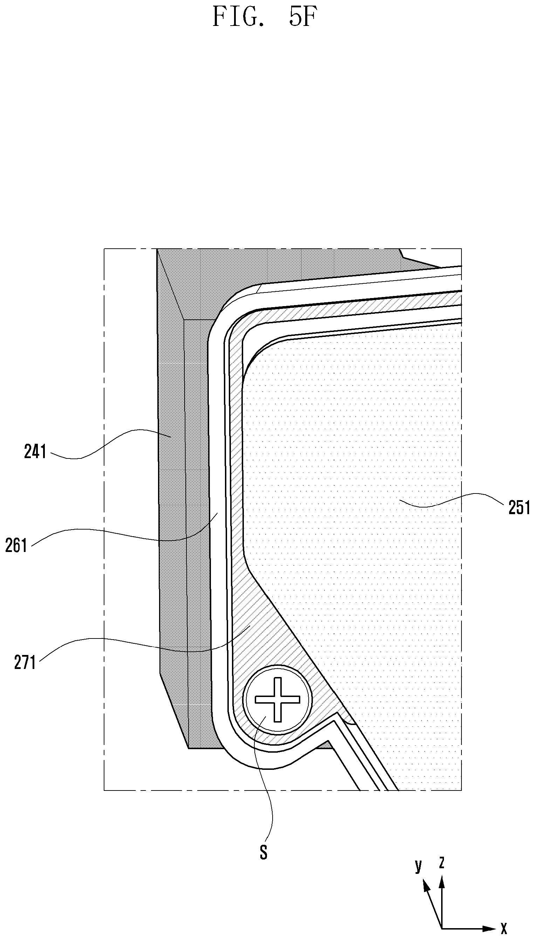

FIG. 5F is a diagram illustrating a partial configuration of an example support structure of a light refraction member according to various embodiments, wherein at least a portion of the first light refraction member 271 may be fixed to the first bracket 261 through a screw S. In various embodiments, at least a portion of the first light refraction member 271 may be fixed to the first bracket 261 through bonding, taping, or fusion bonding.

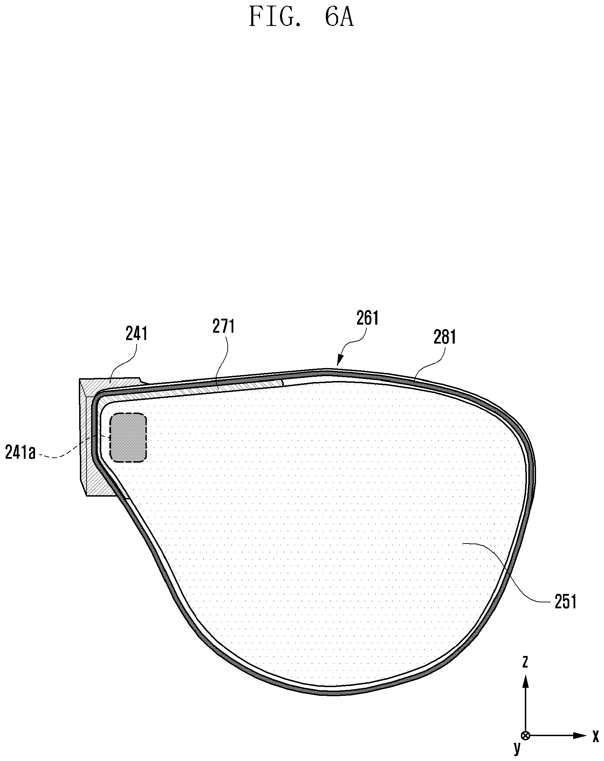

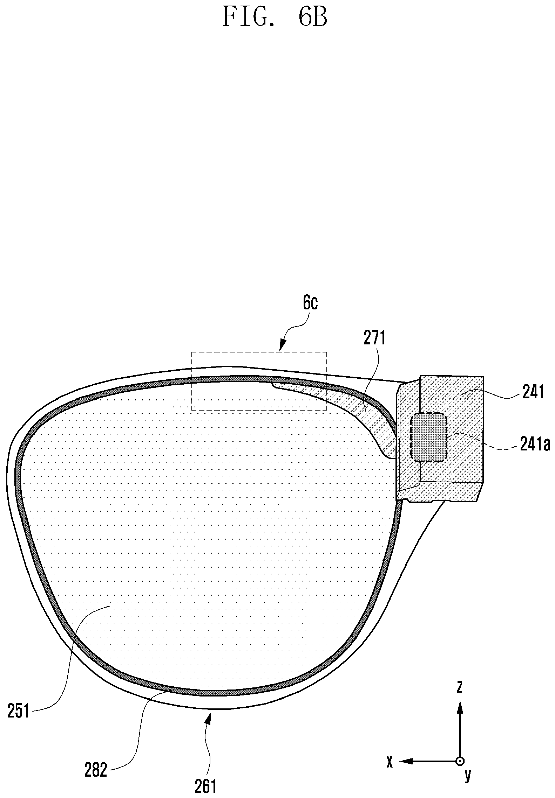

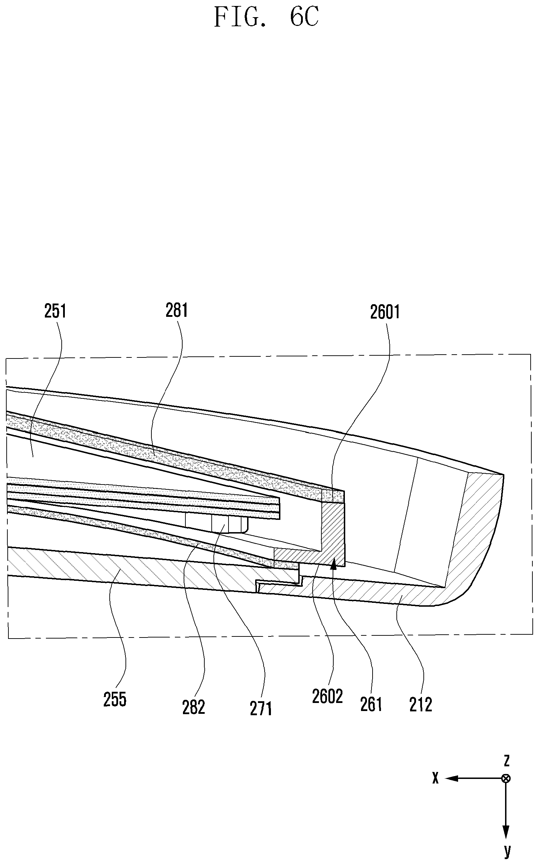

FIG. 6A is a front view illustrating a disposition relationship between a first sealing member and a light source of an example display according to various embodiments. FIG. 6B is a diagram illustrating a disposition relationship between a second sealing member and a light source of the example display when viewed from a rear surface according to various embodiments. FIG. 6C is a partial perspective view illustrating an example wearable electronic device having an enlarged disposition configuration of an area 6c of FIG. 6B according to various embodiments.

With reference to FIG. 6A, the first sealing member 281 may be disposed between the first rim housing 211 and the first surface 2601 of the first bracket 261. In this case, because the first sealing member 281 should be generally disposed along edges of the first bracket 261 and the first wave guide 251, a light source unit 241a of the first display module 241 may be disposed in a closed loop space of the sealing member 281.

With reference to FIG. 6B, the second sealing member 282 may be disposed between the first rear visor 255 and the second surface 2602 of the first bracket 261. In this case, because the second sealing member 282 should be disposed along an edge of the first rear visor 255, the light source unit 241a of the first display module 241 may be disposed outside a closed loop space of the second sealing member 282.

With reference to FIG. 6C, the first sealing member 281 may be disposed along the edge at the first surface 2601 of the first bracket 261, and the second sealing member 282 may be disposed along the edge at the second surface 2602 of the first bracket 261. In this case, as the first sealing member 281 is disposed between the first surface 2601 of the first bracket 261 and the first rim housing (e.g., the first rim housing 211 of FIG. 4), and the second sealing member 282 is disposed between the second surface 2602 of the first bracket 261 and the first rear visor 255, the first wave guide 251 may be positioned inside a closed space and be protected from external foreign substances through the first sealing member 281 and the second sealing member 282 formed in a closed loop shape. According to an embodiment, the first light refraction member 271 may be disposed to face the first wave guide 251 and the light source unit (e.g., the light source unit 241a of FIG. 6A) of the first display module 241 between the first wave guide 251 and the first bracket 261 inside the enclosed space.

According to an example embodiment of the disclosure, because the first wave guide 251 is not directly involved in a disposition structure of the sealing members 281 and 282 attached to have a constant pressing force, the deformation is reduced, thereby reducing optical performance degradation. Furthermore, because the edge of the first wave guide 251 is supported through at least a portion of the first bracket 261, a light leakage phenomenon is reduced or prevented, thereby helping to improve an optical performance.

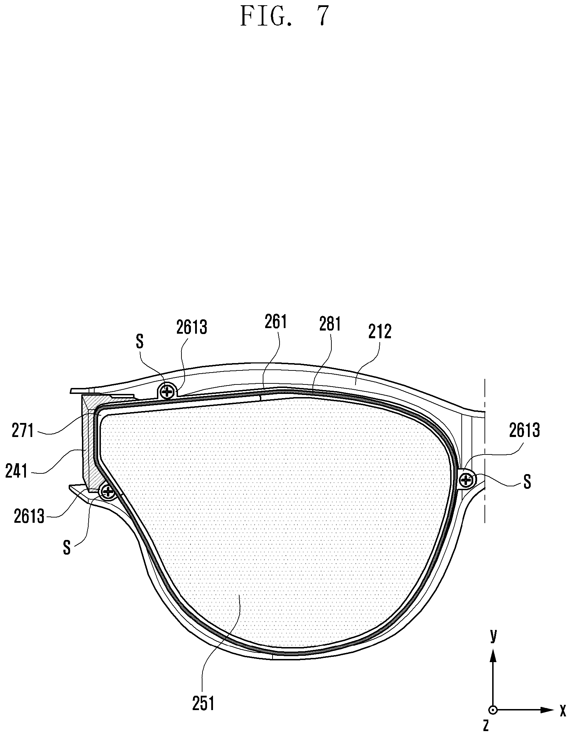

FIG. 7 is a diagram illustrating an example coupling structure between a bracket and a housing according to various embodiments.

As described above, the first bracket 261 may be fixed in a manner in which it is attached to the first rim housing (e.g., the first rim housing 211 of FIG. 4) and the first rear visor (e.g., the rear visor 255 of FIG. 4) through the first sealing member 281 and the second sealing member 282.

With reference to FIG. 7, the first bracket 261 may help a robust design of a wearable electronic device (e.g., the wearable electronic device 200 of FIG. 4) by adding a screw fastening method through at least one screw S in addition to an attachment structure of the above-described sealing members 281 and 282. According to an embodiment, the first bracket 261 may include at least one screw fastening flange 2613 extended outward along the edge. According to an embodiment, the first bracket 261 is fastened to the second rim housing 212 through the screw S through the screw fastening flange 2613, thereby more firmly supporting the first wave guide 251. In various embodiments, the first bracket 261 may be fixed to the first rim housing (e.g., the first rim housing 211 of FIG. 4) through the screw fastening flange 2613.

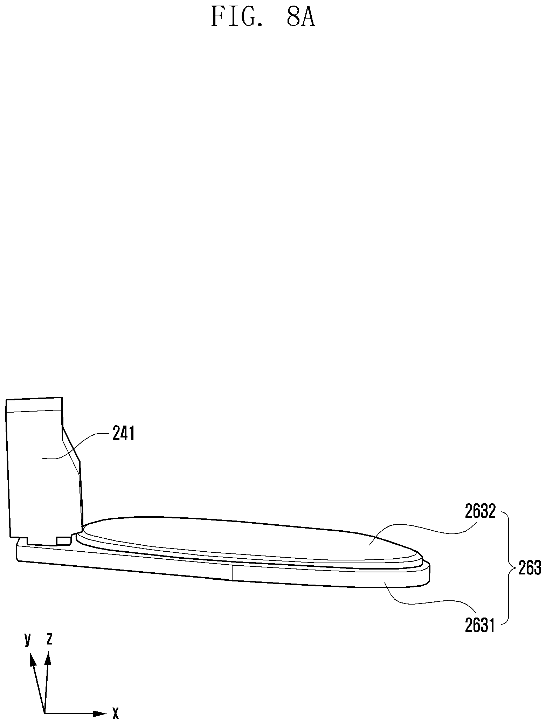

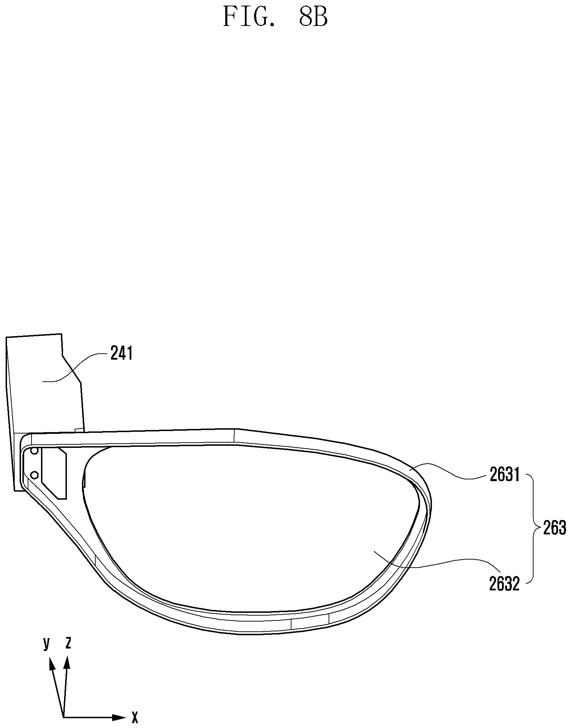

FIGS. 8A and 8B are diagrams illustrating an example bracket according to various embodiments.

With reference to FIGS. 8A and 8B, a first bracket 263 (e.g., the first bracket 261 of FIG. 4) may be formed integrally with the first rear visor (e.g., the first rear visor 255 of FIG. 4). In this case, the first bracket 263 may include an edge portion 2631 and a visor portion 2632 integrally formed with the edge portion 2631. According to an embodiment, the first display module 241 may be fixed to at least a partial area (e.g., the mounting part 2611 of FIG. 5A) of the edge portion 2631 of the first bracket 261. In this case, the second sealing member (e.g., the second sealing member 282 of FIG. 4) may be omitted. In an embodiment, the first bracket (e.g., the first bracket 261 of FIG. 4) may be integrally formed with the first front visor (e.g., the first front visor 253 of FIG. 4).

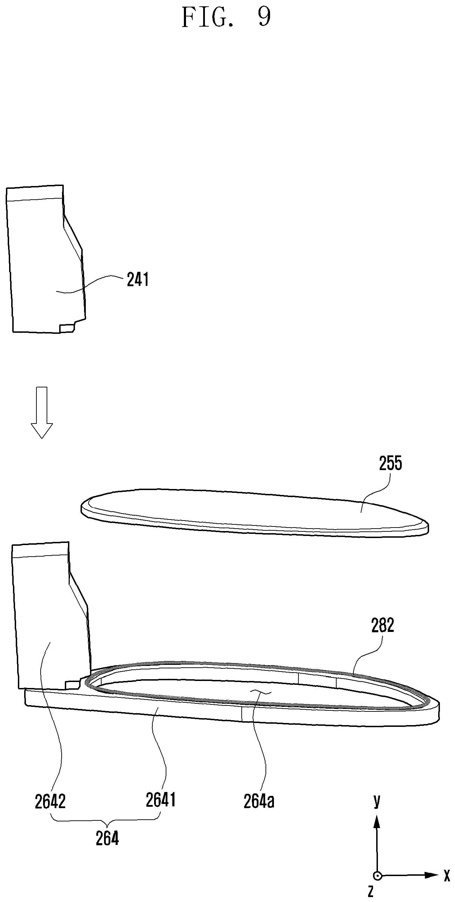

FIG. 9 is a diagram illustrating an example bracket according to various embodiments.

With reference to FIG. 9, a first bracket 264 (e.g., the first bracket 261 of FIG. 4) may further include an edge portion 2641 and a display housing 2642 extended from the edge portion 2641 and for supporting the first display module 241. According to an embodiment, the display housing 2642 may be integrally formed with the first bracket 264. In various embodiments, the display housing 2642 may be structurally coupled to the edge portion 2641. According to an embodiment, the first bracket 264 may include a second sealing member 282 disposed along the edge portion 2641, and as the first rear visor 255 is attached thereon, the opening 264a formed through the edge portion 2641 may be closed. According to an embodiment, with only an operation in which the first display module 241 is mounted in the display housing 2642, the first display module 241 may be optically aligned with a first light refraction member (e.g., the first light refraction member 271 of FIG. 4) and a first wave guide (e.g., the first wave guide 251 of FIG. 4); thus, the first display module 241 may be firmly supported through the display housing 2642 and assembly may be simultaneously improved.

According to various embodiments, the wearable electronic device (e.g., the wearable electronic device 200 of FIG. 4) may include a housing (e.g., the housing 210 of FIG. 4) including a first rim housing (e.g., the first rim housing 211 of FIG. 4) and a second rim housing (e.g., the second rim housing 212 of FIG. 4) coupled to form at least one opening (e.g., the first opening 2101 of FIG. 2); at least one bracket (e.g., the first bracket 261 of FIG. 4) including a first surface (e.g., the first surface 2601 of FIG. 4) facing the first rim housing and a second surface (e.g., the second surface 2602 of FIG. 4) facing the second rim housing and disposed in a first space (e.g., the first space 210a of FIG. 4) between the first rim housing and the second rim housing; at least one wave guide (e.g., the first wave guide 251 of FIG. 4) overlapped with the at least one opening and disposed to be at least partially supported by the at least one bracket; at least one display module (e.g., the first display module 241 of FIG. 4) disposed in a second space (e.g., the second space 210b of FIG. 4) adjacent to the first space between the first rim housing and the second rim housing and disposed to face the at least one wave guide through the at least one bracket; a first sealing member (e.g., the first sealing member 281 of FIG. 4) disposed between the at least one bracket and the first rim housing; and a second sealing member (e.g., the second sealing member 282 of FIG. 4) disposed between the at least one bracket and the second rim housing.

According to various embodiments, the at least one display module may be disposed in a manner in which a light source unit is exposed from the second space to the first space and further include a light refraction member disposed between the light source unit and the at least one wave guide.

According to various embodiments, the light source unit, the light refraction member, and the at least one wave guide may be attached to each other through an optical adhesive member.

According to various embodiments, the wearable electronic device may further include at least one front visor disposed at the first rim housing so as to close the at least one opening; and at least one rear visor disposed at the second rim housing so as to close the at least one opening.

According to various embodiments, the first space may be formed through the at least one front visor and the at least one rear visor.

According to various embodiments, the second sealing member may be disposed between the at least one bracket and the at least one rear visor.

According to various embodiments, at least one visor of the at least one front visor or the at least one rear visor may be integrally formed with the corresponding rim housing.

According to various embodiments, the at least one front visor and the at least one rear visor may be fixed to the corresponding rim housing through bonding, taping, or fusion bonding.

According to various embodiments, the light source unit of the at least one display module may be positioned inside a closed loop of the first sealing member.

According to various embodiments, the light source unit of the at least one display module may be positioned outside a closed loop of the second sealing member.

According to various embodiments, the at least one bracket may include at least one flange extended outward along an edge; and the at least one bracket may be fixed to the first rim housing through a screw penetrating the at least one flange.

According to various embodiments, the at least one bracket may be disposed in a manner that at least partially encloses an edge of the at least one wave guide.

According to various embodiments, the first space and the second space may be separated through the at least one bracket.

According to various embodiments, the wearable electronic device may further include a display housing extended from the at least one bracket, wherein the at least one display module may be at least partially received in the display housing.

According to various embodiments, the first sealing member and the second sealing member may include at least one of compressive tape, sponge, silicone, rubber, or urethane.

According to various embodiments, the wearable electronic device may further include a first rim including a first opening formed through the housing; a second rim connected to the first rim and including a second opening; a first temple foldably coupled from the first rim; a second temple foldably coupled from the second rim; a first wave guide disposed through a first bracket so as to correspond to the first opening; and a second wave guide disposed through a second bracket so as to correspond to the second opening, wherein the wearable electronic device may have a glasses shape.

According to various embodiments, the electronic device (e.g., the wearable electronic device 200 of FIG. 4) may include a housing (e.g., the housing 210 of FIG. 4) including a first rim housing (e.g., the first rim housing 211 of FIG. 4) and a second rim housing (e.g., the second rim housing 212 of FIG. 4) coupled to form at least one opening (e.g., the first opening 2101 of FIG. 2); a bracket (e.g., the bracket 261 of FIG. 4) including a first surface (e.g., the first surface 2601 of FIG. 4) facing the first rim housing and a second surface (e.g., the second surface 2602 of FIG. 4) facing the second rim housing and disposed in a first space (e.g., the first space 210a of FIG. 4) between the first rim housing and the second rim housing; a wave guide (e.g., the first wave guide 251 of FIG. 4) overlapped with the at least one opening and disposed to be at least partially supported by the bracket; a display module (e.g., the first display module 241 of FIG. 4) disposed in a second space adjacent to the first space between the first rim housing and the second rim housing and disposed to face the wave guide through the bracket; a first sealing member (e.g., the first sealing member 281 of FIG. 4) disposed between the bracket and the first rim housing; and a second sealing member (e.g., the second sealing member 282 of FIG. 4) disposed between the at least one bracket and the second rim housing.

According to various embodiments, the display module may be disposed in a manner in which the light source unit is exposed from the second space to the first space, and further include a light refraction member disposed between the light source unit and the wave guide.

According to various embodiments, the light source unit, the light refraction member, and the wave guide may be attached to each other through an optical adhesive member.

According to various embodiments, the display device may further include a front visor disposed at the first rim housing so as to close the at least one opening; and a rear visor disposed at the second rim housing so as to close the at least one opening.

Embodiments of the disclosure disclosed in this specification and drawings merely present specific examples to easily describe the technical content according to the embodiments of the disclosure and to help the understanding of the embodiments of the disclosure, and are not intended to limit the scope of the embodiments of the disclosure. Accordingly, in addition to the embodiments disclosed herein, all changes or modifications derived from the technical ideas of various embodiments of the disclosure should be construed as being included in the scope of various embodiments of the disclosure.

## Claims

1. A wearable electronic device, comprising:
a housing comprising a first rim housing and a second rim housing coupled to form at least one opening;
at least one bracket comprising a first surface facing the first rim housing and a second surface facing the second rim housing and disposed in a first space between the first rim housing and the second rim housing;
at least one wave guide overlapped with the at least one opening and disposed to be at least partially supported by the at least one bracket;
at least one display module disposed in a second space adjacent to the first space between the first rim housing and the second rim housing and disposed to face the at least one wave guide through the at least one bracket;
a first sealing member disposed between the at least one bracket and the first rim housing; and
a second sealing member disposed between the at least one bracket and the second rim housing.

2. The wearable electronic device of claim 1, wherein the at least one display module is disposed in a manner in which a light source is exposed from the second space to the first space, and
the at least one display module further comprises a light refractor disposed between the light source and the at least one wave guide.

3. The wearable electronic device of claim 2, wherein the light source, the light refractor, and the at least one wave guide are attached to each other through an optical adhesive.

4. The wearable electronic device of claim 1, further comprising:
at least one front visor disposed at the first rim housing so as to close the at least one opening; and
at least one rear visor disposed at the second rim housing so as to close the at least one opening.

5. The wearable electronic device of claim 4, wherein the first space is formed through the at least one front visor and the at least one rear visor.

6. The wearable electronic device of claim 4, wherein the second sealing member is disposed between the at least one bracket and the at least one rear visor.

7. The wearable electronic device of claim 4, wherein at least one visor of the at least one front visor or the at least one rear visor is integrally formed with the corresponding rim housing.

8. The wearable electronic device of claim 4, wherein the at least one front visor and the at least one rear visor are fixed to the corresponding rim housing through bonding, taping, or fusion bonding.

9. The wearable electronic device of claim 1, wherein a light source unit of the at least one display module is positioned inside a closed loop of the first sealing member.

10. The wearable electronic device of claim 1, wherein a light source unit of the at least one display module is positioned outside a closed loop of the second sealing member.

11. The wearable electronic device of claim 1, wherein the at least one bracket comprises at least one flange extended outward along an edge; and
the at least one bracket is fixed to the first rim housing through a screw penetrating the at least one flange.

12. The wearable electronic device of claim 1, wherein the at least one bracket is disposed in a manner that at least partially encloses an edge of the at least one wave guide.

13. The wearable electronic device of claim 1, wherein the first space and the second space are separated through the at least one bracket.

14. The wearable electronic device of claim 1, further comprising a display housing extended from the at least one bracket,
wherein the at least one display module is at least partially received in the display housing.

15. The wearable electronic device of claim 1, wherein the first sealing member and the second sealing member comprise at least one of compressive tape, sponge, silicone, rubber, or urethane.
